# FASCICULE DE BREVET EUROPEEN

(11) **EP 4 136 417 B1**
(45) Date de publication et mention de la délivrance du brevet: **20.08.2025**
(21) Numéro de dépôt: 21725576.9
(22) Date de dépôt: 16.04.2021
(51) Int. Cl.: G01H 3/08

(54) **SYSTÈME DE RECONNAISSANCE ET D'IDENTIFICATION DE SOURCES SONORES EN TEMPS RÉEL**
SYSTEM ZUR ECHTZEITERKENNUNG UND IDENTIFIZIERUNG VON SCHALLQUELLEN
SYSTEM FOR REAL-TIME RECOGNITION AND IDENTIFICATION OF SOUND SOURCES

(30) Priorité: 16.04.2020 FR 2003842
(43) Date de publication de la demande: 22.02.2023
(73) Titulaire: UBY, 75008 Paris (FR); Wavely, 59650 Villeneuve d'Ascq (FR)
(72) Inventeur: MAREUGE, Laurent, 78160 MARLY LE ROI (FR); ROLAND, Julien, 59700 MARCQ EN BAROEUIL (FR); BAELDE, Maxime, 59000 LILLE (FR)
(74) Mandataire: Regimbeau
(86) Numéro de dépôt international: PCT/FR2021/050674
(87) Numéro de publication internationale: WO 2021/209726

(56) Documents cités:
- EP-A2- 1 092 964
- US-A1- 2020 066 257
- CAI YANG ET AL: "Sound Recognition", 1 January 2011, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 16 - 34, ISBN: 978-3-540-74549-5, XP047378689
- PANU MAIJALA ET AL: "Environmental noise monitoring using source classification in sensors", APPLIED ACOUSTICS., vol. 129, 1 January 2018 (2018-01-01), GB, pages 258 - 267, XP055619533, ISSN: 0003-682X, DOI: 10.1016/j.apacoust.2017.08.006
- PAN ZHAOTAI ET AL: "Cognitive Acoustic Analytics Service for Internet of Things", 2017 IEEE INTERNATIONAL CONFERENCE ON COGNITIVE COMPUTING (ICCC), IEEE, 25 June 2017 (2017-06-25), pages 96 - 103, XP033151316, DOI: 10.1109/IEEE.ICCC.2017.20

## Description

### DOMAINE TECHNIQUE GENERAL

La présente invention concerne le domaine de l'analyse et la maitrise de nuisance environnementales. Plus précisément, le domaine de l'invention concerne la reconnaissance et l'identification de nuisances sonores, notamment dans un environnement lié aux bruits de chantiers.

### ETAT DE L'ART

L'attention croissante portée aux nuisances, notamment celles générées par les chantiers de constructions ou les opérations industrielles en zone urbaine, nécessite le développement de nouveaux outils permettant la détection et le contrôle de ces nuisances.

Ainsi, de nombreuses méthodes ont été proposées pour permettre la détection des nuisances sonores, ainsi que leur localisation.

Par exemple, il a déjà été proposé d'installer des sonomètres sur les chantiers afin de mesurer le niveau sonore.

Par exemple, le document US 2017/0372242 propose d'installer un réseau de capteurs sonores dans la zone géographique à surveiller et d'analyser les bruits détectés par ces capteurs afin de créer une carte de bruit. Le système génère ensuite des alertes de dépassement de seuil de bruit afin de faire sortir les personnes dans la zone concernée si le niveau de bruit est considéré comme nuisible.

Le document WO 2016/198877 quant à lui propose un procédé de surveillance du bruit dans lequel les données sonores recueillies sont enregistrées lorsqu'un certain niveau sonore est dépassé. Ces données sont ensuite exploitées afin d'identifier la source sonore et réaliser une cartographie pour identifier les zones générant le plus de bruit.

Toutefois, le Demandeur s'est aperçu que tous les bruits ne créaient pas le même niveau de gêne pour les riverains. En conséquence, la simple mesure du niveau sonore n'est pas suffisante pour déterminer si un bruit donné doit être considéré comme une nuisance sonore.

L'enjeu est cependant de taille. En effet, en milieu urbain, les risques encourus en cas de nuisances sonores sont la suspension de dérogations horaires, qui engendrent nécessairement un retard sur la livraison du chantier et de lourdes pénalités financières pour le constructeur, sans compter l'impact sur la santé humaine que cela peut avoir.

EP 1 092 964 A2 divulgue un dispositif de reconnaissance et séparation du bruit qui exploite un réseau neuronal pour classer un signal acoustique en fonction de son spectre de fréquences, donnant une indication du type de signal acoustique.

ANU MAIJALA ET AL, "Environmental noise monitoring using source classification in sensors", APPLIED ACOUSTICS., GB, (20180101), vol. 129, doi:10.1016/j.apacoust.2017.08.006, ISSN 0003-682X, pages 258 - 267, décrit un système de surveillance du bruit dans l'environnement dans lequel un algorithme de classification des formes acoustiques fonctionnant dans un capteur sans fil est utilisé pour attribuer automatiquement le niveau sonore mesuré à différentes sources de bruit.

AN ZHAOTAI ET AL, "Cognitive Acoustic Analytics Service for Internet of Things", 2017 IEEE INTERNATIONAL CONFERENCE ON COGNITIVE COMPUTING (ICCC), IEEE, (20170625), doi:10.1109/IEEE.ICCC.2017.20, pages 96 - 103, décrit un système d'analyse acoustique pour l'IoT qui combine traitement des signaux acoustiques et technologie d'apprentissage automatique.

US 2020/0066257 A1 décrit un système de détection d'événement qui comprend un ou plusieurs ensembles de capteur, chaque ensemble de capteur comprenant un boîtier, un microphone et un processeur de signal audio. Le processeur de signal audio est configuré pour filtrer le signal audio, en extraire des caractéristiques et générer une classification d'événement, qui indique un type d'événement, et une caractéristique d'événement, qui indique la gravité d'un événement.

### PRESENTATION DE L'INVENTION

Un objectif de l'invention est de remédier aux inconvénients précités de l'art antérieur. Notamment, un objectif de l'invention est de proposer une solution permettant de détecter des bruits, qui soit capable d'identifier la ou les sources de la nuisance sonore, de l'exposer et de rendre disponible cette information en temps réel, afin d'améliorer la maîtrise de ces bruits dans une zone géographique déterminée et/ou d'améliorer la communication avec les riverains, afin de réduire les risques de suspension des dérogations horaires voire, si possible, d'obtenir des dérogations horaires supplémentaires et de réduire ainsi la durée du chantier.

Un autre objectif de l'invention est de proposer une solution permettant de détecter et d'analyser des bruits et gérer ces bruits en temps réel en vue de réduire des nuisances sonores dans une zone géographique donnée.

Pour cela, selon un premier aspect, la présente invention propose un procédé d'identification d'une source sonore tel que défini par la revendication 1.

L'invention est avantageusement complétée par les caractéristiques définies par les revendications dépendantes 2 à 11.

L'invention propose selon un second aspect un système d'identification d'une source sonore, telle que défini par la revendication 12.

L'invention est dans son second aspect avantageusement complétée par les caractéristiques suivantes, prises seules ou en une quelconque de leur combinaison techniquement possible :
- le système comprend en outre un détecteur d'un évènement sonore dépendant d'un indicateur d'une énergie du signal sonore acquis par le capteur sonore, et/ou de la réception par le système d'identification d'un signalement d'évènement sonore émis par des moyens de signalement ;
- les moyens de signalement comprennent un terminal mobile configuré pour permettre le signalement d'un évènement sonore par un utilisateur du terminal mobile lorsque l'utilisateur se trouve à une distance inférieure à un seuil donné de la zone géographique prédéterminée ;
- le capteur sonore est fixe ;
- le capteur sonore est mobile ;
- le système comprend en outre des moyens de notification configurés pour permettre la notification d'un évènement sonore lorsque le détecteur d'un évènement sonore détecte un évènement sonore, et/ou lorsque les moyens de signalement émettent un signalement ;
- les moyens de notification comprennent un terminal configuré pour afficher une notification d'un évènement sonore.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
[Fig. 1] la figure 1 représente les étapes d'un mode de réalisation préféré du procédé selon l'invention ;
[Fig. 2] la figure 2 est un schéma d'une architecture pour la mise en œuvre du procédé selon l'invention.

### DESCRIPTION DETAILLEE

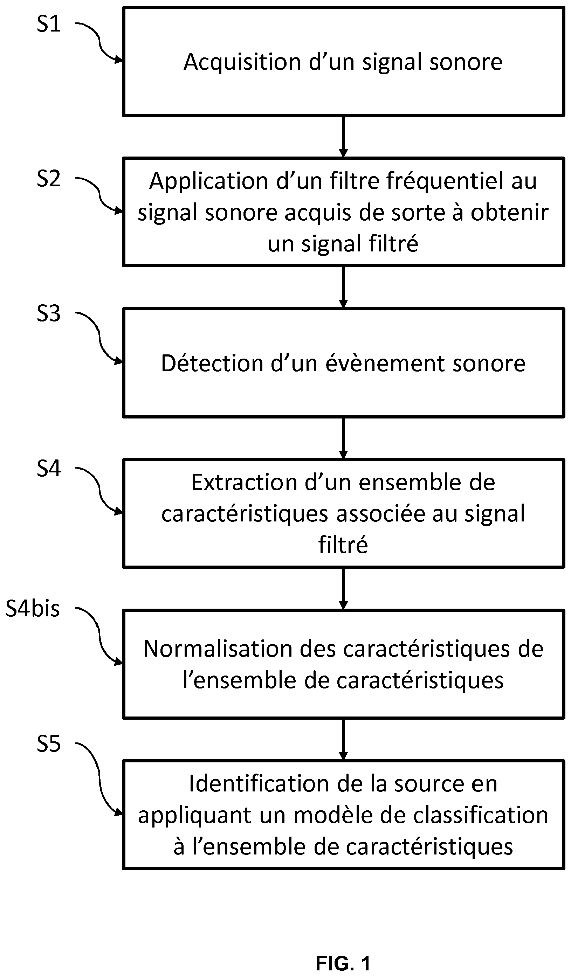

En référence à la **figure 1** un procédé d'identification de sources sonores selon l'invention comprend une étape S1, au cours de laquelle un signal sonore est acquis, par exemple par un capteur sonore, dans une zone pouvant générer des nuisances sonores. Afin de permettre un fonctionnement en temps réel, le signal acquis pourra être de courte durée (entre quelques secondes et quelques dizaines de secondes, par exemple entre deux secondes et trente secondes), permettant ainsi un traitement rapide et direct des données acquises.

Au cours d'une étape S2, un filtre fréquentiel est appliqué au signal acquis au cours de l'étape S1 afin de corriger des défauts du signal. Ces défauts peuvent par exemple être générés par le ou les capteurs sonores utilisés lors de l'étape S1.

Dans une forme de réalisation, le filtre comprend un filtre passe-haut configuré pour retirer une composante continue présente dans le signal ou un bruit non pertinent tel qu'un bruit de vent. En variante, le filtre comprend un filtre plus complexe, tel qu'un filtre en pondération fréquentielle (pondération A, B, C et D). L'utilisation d'un filtre en pondération fréquentielle est particulièrement avantageuse car ces filtres reproduisent la perception de l'oreille humaine et permettent ainsi de faciliter l'extraction de caractéristiques.

Les étapes S1 et S2 forment ainsi une première phase de prétraitement du signal sonore acquis.

Le procédé comprend en outre une deuxième phase, de classification, comprenant les étapes suivantes.

Au cours d'une étape S4, un ensemble de caractéristiques est extrait du signal sonore (« Feature extraction » en anglais). Cet ensemble pourra être par exemple une matrice ou un tenseur. Cette étape S4 permet de représenter le signal sonore d'une manière plus compréhensible pour un modèle de classification tout en réduisant la dimension des données.

Dans une première forme de réalisation, l'étape S4 est réalisée en transformant le signal sonore en un sonagramme (ou sonogramme, ou spectrogramme) représentant l'amplitude du signal sonore en fonction de la fréquence et du temps. Le sonagramme est donc une représentation sous forme d'image du signal sonore. L'utilisation d'une représentation visuelle du signal sonore sous forme d'image permet alors d'utiliser les très nombreux modèles de classification développés pour le domaine de la vision par ordinateur (« Computer vision » en anglais). Ces modèles étant devenus particulièrement performants ces dernières années, transformer un problème quel qu'il soit en problème de vision par ordinateur permet de bénéficier des performances des modèles développés pour ce type de problèmes (notamment grâce aux modèles pré-entrainés).

Suite à l'étape S4 d'extraction de caractéristiques, le procédé comprend une étape optionnelle de modification de l'échelle des fréquences afin de mieux correspondre à la perception de l'oreille humaine et de réduire la taille des images représentant les sonagrammes. Dans une forme de réalisation, l'étape de modification est réalisée à l'aide d'une échelle fréquentielle non-linéaire : l'échelle de Mel, l'échelle de Bark, la largeur de bande rectangulaire équivalente ERB (acronyme anglais pour « Equivalent Rectangular Bandwidth »).

Au cours d'une étape S5, un modèle de classification est ensuite appliqué au sonagramme (éventuellement modifié). Le modèle de classification peut notamment être choisi parmi les modèles suivants : un modèle génératif, tel qu'un modèle de mélange gaussien GMM (acronyme anglais de « Gaussian Mixture Model »), ou un modèle discriminant, tel qu'une machine à vecteurs de support SVM (acronyme de « Séparateur à Vaste Marge »), une forêt d'arbres décisionnels (« Random forest » en anglais). Ces modèles étant relativement peu exigeants en termes de ressources de calcul lors des étapes d'inférence, ils peuvent avantageusement être utilisés dans des systèmes embarqués disposant de ressources de calcul limitées tout en permettant un fonctionnement en temps réel du procédé d'identification.

En variante, le modèle discriminant utilisé pour la classification est de type réseaux de neurones, et plus particulièrement un réseau de neurones convolutif. Avantageusement, le réseau de neurones convolutif est particulièrement performant pour la classification à partir d'images. En particulier des architectures telles que SqueezeNet, MNESNet ou MobileNet (et plus particulièrement MobileNetV2) permettent de bénéficier de la puissance et la précision des réseaux de neurones convolutifs tout en minimisant les ressources de calcul nécessaires. De manière analogue aux modèles précités, le réseau de neurones convolutif présente l'avantage de pouvoir également être utilisé dans des systèmes embarqués disposant de ressources de calcul limitées tout en permettant un fonctionnement en temps réel du procédé d'identification.

La combinaison des étapes de prétraitement S1 et S2, ainsi que l'étape de modification de l'échelle des fréquences avec l'utilisation d'un modèle de classification permet au procédé d'identifier des sources sonores dans un environnement complexe, c'est-à-dire comprenant un nombre élevé de sources sonores différentes tel qu'un chantier, une usine, un environnement urbain, ou des bureaux, notamment en permettant au modèle de classification de discerner plus facilement les sources de nuisance sonore des sons « normaux » tels que la voix par exemple, ne générant pas (ou peu) de nuisance.

Quel que soit le ou les modèles de classification choisis, le procédé comprend une étape initiale au cours de laquelle ces modèles sont préalablement entraînés pour reconnaître différents types de bruit considéré comme pertinents pour la zone à surveiller. Par exemple, dans le cas de la surveillance des nuisances sonores issues d'un chantier, l'étape initiale d'entraînement peut comprendre la reconnaissance des coups de marteau, du bruit d'une disqueuse, du bruit de camions, etc.

Dans une première variante de réalisation, le modèle de classification peut être configuré pour identifier une source précise. La sortie du modèle peut alors prendre la forme d'un résultat sous forme d'un label (tel que « Marteau », « Disqueuse », « Camion » pour les exemples cités ci-dessus).

Dans une deuxième variante de réalisation, le modèle de classification peut être configuré pour fournir des probabilités associées à chaque type de sources possible. La sortie du modèle peut alors prendre la forme d'un vecteur de probabilités, chaque probabilité étant associée à un des labels possibles. Ainsi, dans un exemple, la sortie du modèle pour les exemples de labels cités ci-dessus peut comprendre le vecteur suivant : [marteau : 0.2 ; disqueuse : 0.5 ; camion : 0.3]. Ces deux configurations du modèle de classification permettent alors d'identifier la source de nuisance principale.

Dans une troisième variante de réalisation, le modèle de classification est configuré pour détecter des sources multiples. La sortie du modèle peut alors prendre la forme d'un vecteur de valeurs associées à chaque label, chaque valeur représentant un niveau de confiance associé à la présence de la source dans le signal sonore classifié. La somme des valeurs peut donc être différente de 1. Ainsi, dans un exemple, la sortie du modèle pour les exemples de labels cités ci-dessus peut comprendre le vecteur suivant : [marteau : 0.3 ; disqueuse : 0.6 ; camion : 0.4]. Un seuil peut alors être appliqué à ce vecteur de valeurs pour identifier les sources certainement présentes dans le signal sonore.

Par ailleurs, afin d'améliorer la robustesse du modèle de classification entrainé, les données utilisés pour l'entrainement peuvent être préparées afin de retirer les exemples pouvant entrainer une confusion entre plusieurs sources, par exemple en retirant les exemples d'échantillons sonores comprenant plusieurs sources sonores différentes. De plus, des données d'entrainement constituées d'un échantillon sonore et d'une classe peuvent être sélectionnées aléatoirement afin de permettre à une personne de vérifier que la classe associée à un échantillon sonore correspond bien à la réalité. Le cas échéant, la classe peut être modifiée afin de refléter la vraie source sonore de l'échantillon sonore.

Alternativement, afin de minimiser les ressources nécessaires à la mise en œuvre du procédé (temps de calcul, énergie, mémoire, etc.), le procédé comprend en outre, entre les étapes S2 et S4, une étape S3 de détection d'évènement sonore. La détection d'évènement sonore peut notamment être basée sur des métriques relatives à l'énergie du signal sonore. Par exemple, l'étape S3 est réalisée en calculant l'un au moins des paramètres suivants du signal sonore ; l'énergie du signal, le facteur de crête, le kurtosis temporel, le taux de passage par zéro, et/ou le niveau de pression acoustique SPL (« acronyme anglais de « Sound Pressure Level »). Lorsque l'un au moins de ces paramètres représentant l'intensité de la potentielle nuisance sonore dépasse un seuil donné ou présente des caractéristiques particulières, un évènement sonore est détecté. Ces caractéristiques particulières pouvant être, par exemple, relatives à l'enveloppe du signal (telles qu'une discontinuité forte représentant l'attaque ou le relâchement de l'évènement), ou à la répartition des fréquences dans la représentation spectrale (telles qu'une variation du centre de gravité spectrale).

Cette étape S3 de détection d'évènement sonore permet en outre d'améliorer les performances du modèle de classification, notamment lorsque les différentes sources sonores à identifier présentent des fortes de différences de niveau sonore.

Dans une forme de réalisation, l'étape S4 n'est mise en œuvre que lorsqu'un évènement sonore est détecté à l'étape S3, ce qui permet de ne mettre en œuvre la phase de classification que lorsqu'une potentielle nuisance est détectée. Additionnement, lorsqu'une potentielle nuisance est détectée, le signal sonore (filtré ou non) ainsi que le résultat de la classification peuvent faire l'objet d'étapes de traitement supplémentaires. Le cas échéant, des données de localisation peuvent être prises en compte (en prenant en compte la position du capteur par exemple).

Dans une première sous-étape, les signaux peuvent être agrégés lorsqu'ils sont identifiés comme provenant d'une même source sonore détectée à l'étape S5 dans le signal sonore, par exemple en fonction de leur localisation, de la source identifiée, ainsi que de leur proximité dans le temps. Un niveau de bruit équivalent continu pondéré en A (L_{Aeq}) peut alors être calculé à partir des signaux (agrégés ou non) et comparé à un seuil prédéfini. Si ce seuil est dépassé, une notification peut être émise à destination du personnel chargé de la gestion du site surveillé par un ou plusieurs capteurs. Cette notification peut se faire au moyen d'une alerte envoyée sur un terminal tel qu'un smartphone ou ordinateur, et peut en outre être enregistrée dans une base de données pour un affichage grâce à une interface utilisateur. Dans une variante de réalisation, les probabilités ou valeurs associées à chaque label, retournées par le modèle de classifications peuvent être comparées à des seuils définis pour chaque type de source, ces seuils étant fixés de sorte à correspondre à un niveau de détection minimal admissible pour ladite source, afin de décider de l'envoi d'une notification, typiquement à un chef de chantier afin que celui-ci mette en place les actions nécessaires pour réduire les nuisances sonores.

Alternativement ou en plus, la détection d'évènement sonore peut être réalisée par signalement par des riverains. Pour cela, les riverains disposent d'une application, par exemple une application mobile sur un terminal tel qu'un smartphone, dans laquelle les riverains envoient un signal lorsqu'ils détectent une nuisance sonore. Le signalement entraînant une détection, par association, d'un évènement sonore selon l'étape S3. Avantageusement, la prise en compte de signalements par les riverains permet de tenir compte de leur ressenti face aux bruits et d'améliorer la discrimination des bruits devant être considérés comme des nuisances sonores.

Additionnellement, les détections provenant de signalement par des riverains peuvent faire l'objet d'étapes de traitement supplémentaires. Ces signalements peuvent être agrégés en fonction de leur similitude, par exemple s'ils proviennent tous d'une même zone géographique et/ou ont été réalisés à un certain moment. De plus, ces signalements peuvent être associés à des évènements sonores détectés enregistrés par un capteur, toujours selon des règles de proximité géographique et temporelle. Les signalements peuvent alors faire l'objet d'une notification à destination du personnel chargé de la gestion du site surveillé par un ou plusieurs capteurs.

Dans une variante de réalisation, les évènements détectés peuvent être enregistrés dans une base de données avec, le cas échant les signalements envoyés. Ces données peuvent ainsi être analysées afin de détecter lorsqu'un évènement similaire à un évènement passé ayant généré des signalements à lieu, cette information peut alors faire l'objet d'une notification à destination du personnel chargé de la gestion du site surveillé par un ou plusieurs capteurs, typiquement à un chef de chantier afin que celui-ci mette en place les actions nécessaires pour réduire les nuisances sonores.

Le cas échéant, une étape S4bis de normalisation peut être mise en œuvre après l'étape S4 d'extraction de caractéristiques afin de minimiser les conséquences des variations des conditions d'acquisition du signal sonore (distance au microphone, puissance du signal, niveau de bruit ambiant, etc.). L'étape de normalisation peut notamment comprendre l'application d'une échelle logarithmique aux amplitudes du signal représentées dans le sonagramme. En variante, l'étape de normalisation comprend une normalisation statistique des amplitudes du signal représentées par le sonagramme de manière à ce que la moyenne des amplitudes du signal ait une valeur de 0 et sa variance une valeur de 1 afin d'obtenir une variable centrée réduite.

En outre, les évènements sonores détectés et identifiés subissent un post-traitement supplémentaire afin d'améliorer la fiabilité des identifications. Ce post-traitement permet d'évaluer la fiabilité des identifications réalisées et de rejeter les identifications évaluées comme non fiables. Pour cela, le post-traitement comprend les étapes suivantes :
- Comparaison du niveau sonore L_{Aeq} (ou niveau sonore équivalent) de l'évènement à un premier seuil prédéterminé, l'identification étant alors considérée comme fiable si le niveau sonore L_{Aeq} de l'évènement est supérieur au seuil, sinon, l'identifications est considérée comme non fiable et l'évènement est rejeté ;
- Comparaison de la valeur représentant un niveau de confiance associé à la présence de la source identifié dans le signal sonore classifié à un deuxième seuil prédéterminé, l'identification de la source étant considérée comme fiable, lorsque la valeur représentant le niveau de confiance est supérieure au deuxième seuil, sinon, l'identification est considérée comme non fiable et l'évènement est rejeté. Cette étape permet d'assurer que la classification réalisée est suffisamment fiable. En effet, le fait que la source identifiée lors de la classification soit la source avec le plus haut niveau confiance entre toutes les sources possibles n'implique pas que le niveau de confiance correspondant soit élevé.

Un évènement sonore considéré comme non fiable ne sera alors pas notifié au personnel chargé de la gestion du site surveillé par le ou les capteurs et ne sera pas affiché sur l'interface utilisateur. Cependant, dans le cas d'un évènement détecté suite à un signalement d'un riverain, l'évènement pourra toutefois être conservé et faire l'objet d'une notification le signalant au personnel chargé de la gestion du site surveillé comme un évènement n'ayant pas dépassé les différents seuils de comparaison mais ayant fait l'objet d'un signalement, en particulier lorsque d'autres signalement pour des sources et des zones géographiques similaires ont déjà eu lieu.

Les différentes sources identifiées lors de la classification présentent une certaine redondance sous la forme d'une hiérarchie, c'est-à-dire qu'une classe représentant un type de source peut être une classe mère de plusieurs autres classes représentant des types de sources (on parle alors de classes filles). Par exemple, une classe mère peut être du type « engin de chantier » et comprendre des classes filles telles que « pelleteuse », « camion », « chargeuse », etc. L'utilisation de cette hiérarchie permet encore d'améliorer la fiabilité de détection et de l'identification. En effet lors du post-traitement décrit précédemment et lorsque la classe identifiée est une classe mère, on ajoute, lors de la comparaison de la valeur représentant le niveau de confiance de l'identification au deuxième seuil, une étape d'identification de la classe fille ayant le niveau de confiance le plus élevé, et on compare le niveau de confiance associé à la classe fille à un troisième seuil prédéterminé (qui pourra être identique au deuxième). Dans ce cas, si le niveau de confiance de la classe fille est supérieur au troisième seuil, c'est cette classe fille qui sera utilisée comme source identifiée de l'évènement sonore, sinon, on utilisera simplement la classe mère.

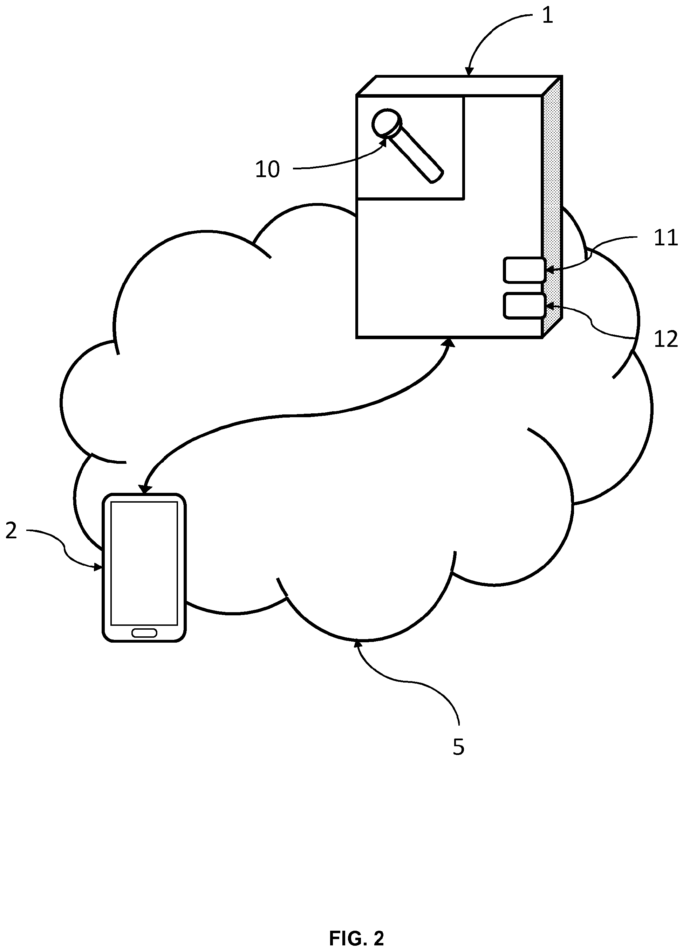

Par ailleurs, certains types de sources peuvent être considérés comme non pertinents (et donc ne pas faire l'objet d'une notification). Ces types de sources non pertinent peuvent correspondre à des sources qui ne sont pas liées à la zone surveillée, et être énumérés sous la forme d'une liste spécifique à la zone surveillée. Par exemple, lorsque la zone surveillée est un chantier, les types de sources non pertinent peuvent comprendre les voitures, les sirènes etc. En référence à la figure 2, le procédé d'identification de sources sonores peut être mis en œuvre par un système comprenant un dispositif d'identification 1 comprenant un microphone 10, des moyens de traitement de données 11 de type processeur configurés pour mettre en œuvre le procédé de d'identification de sources sonores selon l'invention, ainsi que des moyens de stockage de données 12, tels qu'une mémoire informatique, par exemple un disque dur, sur lesquels sont enregistrées des instructions de code pour l'exécution du procédé d'identification de sources sonores selon l'invention.

Dans un mode de réalisation, le microphone 10 est capable de détecter des sons dans un large spectre, c'est-à-dire un spectre couvrant des infrasons aux ultrasons, typiquement de 1 Hz à 100 kHz. Un tel microphone 10 permet ainsi de mieux identifier les nuisances sonores en disposant de données complètes, mais aussi de détecter un plus grand nombre de nuisances (par exemple détecter des vibrations).

Le dispositif d'identification 1 peut par exemple être intégré dans un boîtier pouvant être attaché de manière fixe dans une zone géographique dans laquelle des nuisances sonores doivent être surveillées et maîtrisées. Par exemple, le boîtier peut être fixé sur une palissade de chantier, au niveau d'une clôture ou sur des équipements dont le niveau de nuisance doit être surveillé. En variante, le dispositif d'identification 1 peut être miniaturisé afin de le rendre mobile. Ainsi, le dispositif d'identification 1 peut être porté par un personnel travaillant dans la zone géographique tel qu'un personnel du chantier à surveiller. Typiquement, le microphone 10 peut être intégré et/ou fixé sur le col du personnel.

Dans une forme de réalisation, le dispositif d'identification peut être en communication avec des clients 2, un client pouvant être par exemple un smartphone d'un utilisateur du système. Le dispositif d'identification 1 et les clients 2 sont alors en communication au moyen d'un réseau étendu 5 tel que le réseau internet pour l'échange des données, par exemple en utilisant un réseau mobile (tel que GPRS, LTE, etc.).

## Revendications

1. Procédé d'identification d'une source sonore dans un chantier comprenant les étapes suivantes :
S1 : acquisition d'un signal sonore dans une zone géographique du chantier ;
S2 : application d'un filtre fréquentiel au signal sonore acquis de sorte à obtenir un signal filtré ;
S4: extraction d'une matrice de caractéristiques associées au signal filtré ; et
S5 : identification de la source sonore en appliquant un modèle de classification à la matrice de caractéristiques extraite à l'étape S4, le modèle de classification ayant comme sortie au moins une classe associée à la source sonore du signal sonore acquis ;
et une étape de post traitement, postérieure à l'étape S5, comprenant la sous-étape suivante :
- comparaison d'une valeur représentant un niveau de confiance associé à la présence de la source identifiée dans le signal sonore classifié à un deuxième seuil prédéterminé, l'identification de la source est alors considérée comme fiable lorsque la valeur représentant le niveau de confiance est supérieure au deuxième seuil, sinon, l'identification est considérée comme non fiable et l'évènement est rejeté ;
**caractérisé en ce que** :
l'étape de post traitement comprend en outre la sous-étape :
- évaluation d'un niveau sonore du signal acquis et comparaison du niveau sonore à un premier seuil prédéterminé, l'identification est alors considérée comme fiable si le niveau sonore du signal acquis est supérieur au seuil, sinon, l'identification est considérée comme non fiable et l'événement est rejeté ;
et **en ce que** :
les différentes sources sonores identifiées lors de la classification présentent une certaine redondance sous la forme d'une hiérarchie dans laquelle certaines sources sont définies comme sources mères, et d'autres sources sont définies comme sources filles et sont liées à une source mère, l'étape de post traitement comprenant en outre les étapes suivantes lorsque la source identifiée est une source mère et que la valeur représentant le niveau de confiance associé à la présence de la source mère identifiée dans le signal sonore classifié est supérieur au deuxième seuil prédéterminé :
- détermination des sources filles liées à la source mère identifiée ;
- identification de la source fille liée à la source mère identifiée ayant une valeur représentant un niveau de confiance associé à la présence de la source fille dans le signal sonore le plus élevé ;
- comparaison de la valeur représentant un niveau de confiance associé à la présence de la source fille identifiée dans le signal sonore à une troisième seuil prédéterminé, si cette valeur est supérieure au troisième seuil la source fille identifiée est alors utilisée comme source identifiée de l'évènement sonore, sinon, c'est la source mère qui est utilisée.

2. Procédé d'identification d'une source sonore selon la revendication 1 dans lequel au cours de l'étape S2, le filtre fréquentiel comprend un filtre de pondération fréquentielle et/ou un filtre passe haut.

3. Procédé d'identification d'une source sonore selon l'une des revendications 1 et 2, dans lequel la matrice de caractéristiques est un sonagramme représentant des énergies sonores associées à des instants du signal filtré et à des fréquences données.

4. Procédé d'identification d'une source sonore selon la revendication 3, dans lequel les fréquences sont converties selon une échelle fréquentielle non-linéaire.

5. Procédé d'identification d'une source sonore selon la revendication 4, dans lequel l'échelle fréquentielle non-linéaire est une échelle de Mel.

6. Procédé d'identification d'une source sonore selon l'une des revendications 4 ou 5, dans lequel les énergies sonores représentées dans le sonagramme sont convertis selon une échelle logarithmique.

7. Procédé d'identification d'une source sonore selon l'une des revendications 1 à 6, comprenant en outre, préalablement à l'étape S5, une étape S4bis, de normalisation des caractéristiques de la matrice de caractéristiques en fonction de moments statistiques des caractéristiques de la matrice de caractéristiques.

8. Procédé d'identification d'une source sonore selon l'une des revendications 1 à 7, dans lequel le modèle de classification utilisé à l'étape S5 est l'un des modèles suivants : un modèle génératif ou un modèle discriminant.

9. Procédé d'identification d'une source sonore selon l'une des revendications 1 à 8, dans lequel la sortie du modèle de classification comprend l'un des éléments suivants : une classe de source sonore identifiée comme étant à l'origine du signal sonore, un vecteur de probabilités, chaque probabilité étant associée à une classe de source sonore, une liste de classes de différentes sources sonores identifiées comme étant à l'origine du signal sonore.

10. Procédé d'identification d'une source sonore selon l'une des revendications 1 à 9, comprenant en outre, préalablement à l'étape S4, une étape S3, de détection d'un évènement sonore, les étapes S4 et S5 étant mises en œuvre uniquement lorsqu'un évènement sonore est détecté, la détection d'un évènement sonore dépendant : d'un indicateur d'une énergie du signal sonore acquis à l'étape S1, et/ou de la réception d'un signalement d'évènement sonore.

11. Procédé d'identification d'une source sonore selon la revendication 10, comprenant en outre une étape de notification d'un évènement sonore lorsqu'un évènement sonore est détecté, et/ou lorsqu'un signalement est reçu.

12. Système d'identification d'une source sonore dans un chantier, comprenant :
- un capteur sonore configuré pour acquérir un signal sonore dans une zone géographique prédéterminée du chantier,
- des moyens de traitement de données 11 de type processeur configurés pour mettre en œuvre le procédé selon l'une des revendications 1 à 11.

13. Système d'identification d'une source sonore selon la revendication 12, comprenant en outre un détecteur d'un évènement sonore dépendant d'un indicateur d'une énergie du signal sonore acquis par le capteur sonore, et/ou de la réception par le système d'identification d'un signalement d'évènement sonore émis par des moyens de signalement.

14. Système d'identification d'une source sonore selon la revendication 13, dans lequel les moyens de signalement comprennent un terminal mobile configuré pour permettre le signalement d'un évènement sonore par un utilisateur du terminal mobile lorsque l'utilisateur se trouve à une distance inférieure à un seuil donné de la zone géographique prédéterminée.

15. Moyens de stockage de données (12) sur lesquels sont enregistrées des instructions de code, qui lorsqu'elles sont exécutées par un ordinateur, conduisent celui-ci à mettre en œuvre le procédé selon l'une des revendications 1 à 11.

## Patentansprüche

1. Verfahren zur Identifizierung einer Schallquelle auf einer Baustelle, das die folgenden Schritte umfasst:
S1: Erfassen eines Tonsignals in einem geografischen Bereich der Baustelle;
S2: Anwenden eines Frequenzfilters auf das erfasste Tonsignal, um ein gefiltertes Signal zu erhalten;
S4: Extrahieren einer Matrix von Merkmalen, die dem gefilterten Signal zugeordnet sind; und
S5: Identifizieren der Schallquelle durch Anwenden eines Klassifikationsmodells auf die in Schritt S4 extrahierte Merkmalsmatrix, wobei das Klassifikationsmodell als Ausgabe mindestens eine Klasse hat, die der Schallquelle des erfassten Tonsignals zugeordnet ist;
und einen Nachbearbeitungsschritt nach Schritt S5, der den folgenden Unterschritt umfasst:
- Vergleichen eines Wertes, der ein Konfidenzniveau darstellt, das dem Vorhandensein der in dem klassifizierten Tonsignal identifizierten Quelle zugeordnet ist, mit einem zweiten vorbestimmten Schwellenwert, wobei die Identifizierung der Quelle dann als zuverlässig angesehen wird, wenn der Wert, der das Konfidenzniveau darstellt, größer als der zweite Schwellenwert ist, und andernfalls die Identifizierung als unzuverlässig angesehen wird und das Ereignis zurückgewiesen wird;
**dadurch gekennzeichnet, dass**:
der Nachbearbeitungsschritt ferner den folgenden Unterschritt umfasst:
- Auswerten eines Schallpegels des erfassten Signals und Vergleichen des Schallpegels mit einem ersten vorbestimmten Schwellenwert, wobei die Identifizierung dann als zuverlässig angesehen wird, wenn der Schallpegel des erfassten Signals über dem Schwellenwert liegt, und andernfalls die Identifizierung als unzuverlässig angesehen wird und das Ereignis zurückgewiesen wird;
und dass:
die verschiedenen bei der Klassifizierung identifizierten Schallquellen eine gewisse Redundanz in Form einer Hierarchie aufweisen, in der bestimmte Quellen als Mutterquellen definiert sind und andere Quellen als Tochterquellen definiert sind und mit einer Mutterquelle verbunden sind, wobei der Nachverarbeitungsschritt ferner die folgenden Schritte umfasst, wenn die identifizierte Quelle eine Mutterquelle ist und der Wert, der das Konfidenzniveau darstellt, das dem Vorhandensein der in dem klassifizierten Tonsignal identifizierten Mutterquelle zugeordnet ist, über dem zweiten vorbestimmten Schwellenwert liegt:
- Bestimmen der Tochterquellen, die mit der identifizierten Mutterquelle verbunden sind;
- Identifizieren der Tochterquelle, die mit der identifizierten Mutterquelle verbunden ist, die einen Wert aufweist, der ein Konfidenzniveau darstellt, das dem Vorhandensein der Tochterquelle in dem höchsten Tonsignal zugeordnet ist;
- Vergleichen des Wertes, der ein Konfidenzniveau darstellt, das dem Vorhandensein der identifizierten Tochterquelle in dem Tonsignal zugeordnet ist, mit einem dritten vorbestimmten Schwellenwert, wobei, wenn dieser Wert größer als der dritte Schwellenwert ist, die identifizierte Tochterquelle dann als identifizierte Quelle des Schallereignisses verwendet wird, und andernfalls die Mutterquelle verwendet wird.

2. Verfahren zur Identifizierung einer Schallquelle nach Anspruch 1, bei dem in Schritt S2 der Frequenzfilter einen Frequenzwichtungsfilter und/oder einen Hochpassfilter umfasst.

3. Verfahren zur Identifizierung einer Schallquelle nach einem der Ansprüche 1 und 2, wobei die Merkmalsmatrix ein Sonagramm ist, das Schallenergien darstellt, die Zeitpunkten des gefilterten Signals und gegebenen Frequenzen zugeordnet sind.

4. Verfahren zur Identifizierung einer Schallquelle nach Anspruch 3, bei dem die Frequenzen gemäß einer nichtlinearen Frequenzskala umgerechnet werden.

5. Verfahren zur Identifizierung einer Schallquelle nach Anspruch 4, wobei die nichtlineare Frequenzskala eine Mel-Skala ist.

6. Verfahren zur Identifizierung einer Schallquelle nach einem der Ansprüche 4 oder 5, bei dem die im Sonagramm dargestellten Schallenergien gemäß einer logarithmischen Skala umgerechnet werden.

7. Verfahren zur Identifizierung einer Schallquelle nach einem der Ansprüche 1 bis 6, das ferner vor dem Schritt S5 einen Schritt S4a umfasst, bei dem die Merkmale der Merkmalsmatrix in Abhängigkeit von statistischen Momenten der Merkmale der Merkmalsmatrix normalisiert werden.

8. Verfahren zur Identifizierung einer Schallquelle nach einem der Ansprüche 1 bis 7, wobei das in Schritt S5 verwendete Klassifikationsmodell eines der folgenden Modelle ist: ein generatives Modell oder ein Diskriminanzmodell.

9. Verfahren zur Identifizierung einer Schallquelle nach einem der Ansprüche 1 bis 8, wobei die Ausgabe des Klassifikationsmodells eines der folgenden Elemente umfasst: eine Klasse einer Schallquelle, die als Ursprung des Tonsignals identifiziert wurde, einen Vektor von Wahrscheinlichkeiten, wobei jede Wahrscheinlichkeit einer Klasse einer Schallquelle zugeordnet ist, eine Liste von Klassen verschiedener Schallquellen, die als Ursprung des Tonsignals identifiziert wurden.

10. Verfahren zum Identifizieren einer Schallquelle nach einem der Ansprüche 1 bis 9, das ferner vor Schritt S4 einen Schritt S3 zum Erfassen eines Schallereignisses umfasst, wobei die Schritte S4 und S5 nur dann durchgeführt werden, wenn ein Schallereignis erfasst wird, wobei die Erfassung eines Schallereignisses abhängt von: einem Indikator einer Energie des in Schritt S1 erfassten Tonsignals und/oder dem Empfang einer Meldung eines Schallereignisses.

11. Verfahren zum Identifizieren einer Schallquelle nach Anspruch 10, das ferner einen Schritt zum Benachrichtigen über ein Schallereignis umfasst, wenn ein Schallereignis erfasst wird, und/oder wenn eine Meldung empfangen wird.

12. Verfahren zur Identifizierung einer Schallquelle auf einer Baustelle, umfassend:
- einen Schallsensor, der so konfiguriert ist, dass er ein Tonsignal in einem vorbestimmten geografischen Bereich der Baustelle erfasst,
- prozessorähnliche Datenverarbeitungsmittel 11, die so konfiguriert sind, dass sie das Verfahren nach einem der Ansprüche 1 bis 11 durchführen.

13. System zur Identifizierung einer Schallquelle nach Anspruch 12, das ferner einen Detektor für ein Schallereignis umfasst, der von einem Indikator für eine Energie des vom Schallsensor erfassten Tonsignals abhängt, und/oder davon, dass das Identifizierungssystem eine Meldung eines Schallereignis empfängt, die von Meldemitteln gesendet wird.

14. System zur Identifizierung einer Schallquelle nach Anspruch 13, bei dem die Meldemittel ein mobiles Endgerät umfassen, das so konfiguriert ist, dass es die Meldung eines Schallereignisses durch einen Benutzer des mobilen Endgeräts ermöglicht, wenn sich der Benutzer in einer Entfernung unterhalb eines gegebenen Schwellenwerts von der vorbestimmten geografischen Zone befindet.

15. Datenspeichermittel (12), auf denen Codebefehle aufgezeichnet sind, die, wenn sie von einem Computer ausgeführt werden, diesen dazu veranlassen, das Verfahren nach einem der Ansprüche 1 bis 11 durchzuführen.

## Claims

1. A method for identifying a sound source in a construction site comprising the steps of:
S1: acquiring a sound signal in a geographical zone of the construction site;
S2: applying a frequency filter to the acquired sound signal, thereby obtaining a filtered signal;
S4: extracting a matrix of features associated to the filtered signal; and
S5: applying a classification model to the matrix of features extracted in step S4 to identify the sound source, the classification model having as output at least one class associated with the sound source of the acquired sound signal; and
a post-processing step, subsequent to step S5, which comprises the following sub-step:
- comparing a value representing a level of confidence associated with the presence of the source identified in the classified sound signal with a second predetermined threshold, the identifying of the source being considered as reliable when the value representing the level of confidence is greater than the second threshold, otherwise the identifying is considered as non reliable and the event is rejected;
**characterized in that**:
the post-processing step further comprises the sub-step:
- evaluating a sound level of the acquired signal and comparing the sound level with a first predetermined threshold, said identifying is then considered reliable if the sound level of the acquired signal is greater than the threshold, otherwise the identifying is considered as non reliable and the event is rejected;
and **in that**:
the various sound sources identified during the classification have a certain redundancy in the form of a hierarchy wherein certain sources are defined as mother sources, and other sources are defined as child sources and are linked to a mother source, the post-processing step further comprises the following steps when the identified sound source is a mother source and when the value representing the level of confidence associated with the presence of the mother source identified in the classified sound signal is greater than the second predetermined threshold:
- determining the child sources linked to the identified mother source;
- identifying the child source linked with the identified mother source having the highest value representing a level of confidence associated with the presence of the child source in the obtained sound signal;
- comparing the value representing the level of confidence associated with the presence of the child source identified in the obtained sound signal with a third predetermined threshold, if this value is greater than the third predetermined threshold, the identified child source is used as the source identified of the sound event, otherwise the mother source is used.

2. The method for identifying a sound source of claim 1, wherein in step S2 the frequency filter comprises a frequency weighting filter and/or a high pass filter.

3. The method for identifying a sound source of one of claims 1 and 2, wherein the matrix of features is a sonogram representing sound energies associated with instants and frequencies.

4. The method for identifying a sound source of claim 3, wherein the frequencies are converted according to a non-linear frequency scale.

5. The method for identifying a sound source of claim 4, wherein the non-linear frequency scale is a Mel scale.

6. The method for identifying a sound source of one of claims 4 and 5, wherein the sound energies represented in the sonogram are converted according to a logarithmic scale.

7. The method for identifying a sound source of one of claims 1 to 6, further comprising, prior to step S5, a step S4bis of normalizing the features of the matrix of features according to statistical moments of said features of the matrix of features.

8. The method for identifying a sound source of one of claims 1 to 7, wherein the classification model used in step S5 is one of a generative model or a discriminating model.

9. The method for identifying a sound source of one of claims 1 to 8, wherein an output of the classification model comprises one of the following elements: a class of the sound source identified as an origin of the sound signal, a vector of probabilities, each probability being associated with a class of the sound source, a list of classes of different sound sources identified as the origin of the sound signal.

10. The method for identifying a sound source of one of claims 1 to 9, further comprising, prior to step S4, a step S3, of detecting a sound event, the steps S4 and S5 being implemented only when a sound event is detected, the detection of a sound event depending on an indicator of an energy of the sound signal acquired at step S1 and/or on a reception of a signaling of a sound event.

11. The method for identifying a sound source of claim 10, further comprising a step of notifying a sound event when a sound event is detected and/or when a signaling is received.

12. A system for identifying a sound source at a construction site, comprising:
- a sound sensor configured to acquire a sound signal in a predetermined geographical zone of the construction site,
- a data processing means configured of processor type configured to perform the method of one claims 1 to 11.

13. The system for identifying a sound source of claim 12, further comprising a detector of a sound event depending on an indicator of an energy of the sound signal acquired by the sound sensor and/or on the reception by the system for identifying of a signaling of a sound event emitted by signaling means.

14. The system for identifying a sound source of claim 13, wherein the signaling means comprise a mobile terminal configured to allow the signaling of a sound event by a user of the mobile terminal when the user is at a distance less than a given threshold from the predetermined geographical zone.

15. Data storage means (12) on which are recorded code instructions, which when executed by a computer, cause the latter to implement the method of one of claims 1 to 11.
